# EUROPEAN PATENT SPECIFICATION

(11) **EP 4 319 568 B1**
(45) Date of publication and mention of the grant of the patent: **29.07.2026**
(21) Application number: 22720037.5
(22) Date of filing: 07.04.2022
(51) Int. Cl.: A23C 23/00, A23D 7/005, A23D 7/01, A23L 27/27, A23L 27/20, A23L 27/26

(54) **METHOD FOR PREPARING A SALTED SPREADABLE FOOD CREAM**
VERFAHREN ZUR HERSTELLUNG EINER GESALZENEN STREICHFÄHIGEN LEBENSMITTELCREME
PROCÉDÉ DE PRÉPARATION D'UN CRÈME ALIMENTAIRE SALÉE À TARTINER

(30) Priority: 07.04.2021 IT 202100008693
(43) Date of publication of application: 14.02.2024
(73) Proprietor: Longhin, Alessandro, 66041 Atessa (IT); De Marcellis, Giuseppe, 64100 Teramo (IT); D'Orsi, Gennaro, 43044 Collecchio (PR) (IT)
(72) Inventor: Longhin, Alessandro, 66041 Atessa (IT); De Marcellis, Giuseppe, 64100 Teramo (IT)
(74) Representative: Autuori & Partners S.R.L.
(86) International application number: PCT/IB2022/053255
(87) International publication number: WO 2022/215021

(56) References cited:
- PT-A- 110 354
- US-A- 4 762 725
- US-A- 5 102 680
- US-A1- 2006 121 175
- US-A1- 2009 098 245

## Description

### Field of the Invention

The present invention generally relates to the technical field of food technology, and it particularly has as object a method for preparing a salty spreadable food cream.

### Definitions

In the present text, the phrase "% by weight" and its derivatives referred to one or more ingredients of the salted spreadable food cream indicates the weight percentage of such one or more ingredients with respect to the total weight of the salted spreadable cream.

In the present text, the phrase "substantially free of" and its derivatives referred to one or more ingredients of the spreadable cream indicates that the percentage by weight of said one or more ingredients is less than or equal to 1% with respect to the total weight of the spreadable cream.

In the present text, the phrase "solid fat" and its derivatives refers to a fat in solid form at ambient temperature and pressure.

In the present text, the term "salted or mainly salted" and its derivatives refers to the organoleptic aspect attributable to the taste perceived by the consumer.

In the present text, the term "residual humidity" and its derivatives indicates the percentage of the remaining humidity after a drying or dehydration process of a specific food or ingredient.

In the present text, the term "water activity" and its derivatives indicates the water availability in a certain ingredient or food, expressed in a dimensionless value ranging from 0 to 1 defining the ratio between the water steam pressure in the same ingredient or food and the steam pressure of pure water.

In the present text, the term "supporting ingredient" and its derivatives indicates an optional ingredient suitable to improve the organoleptic, nutritional and/or structural performance of the salted spreadable food cream that is the object of the present invention.

In the present text, the term "providing" or its derivatives indicates the preparation of one or more ingredients of interest for a step of a process of interest, therefore including any

prior treatment suitable to the optimal completion of the same step of interest, starting from the simple collection and potential storing to thermal and/or chemical and/or physical pretreatments and similar.

In the present text, the phrase "added sugars" or its derivatives refers to sugars and syrups added to food during treatment or during industrial preparation. They are therefore not fruit sugars or sugars found in vegetables or milk.

In the present text, the term "sweeteners" or its derivatives refers to sweetening products substitute for simple sugar (sucrose), honey or fructose. These products are used because they contain few or zero calories, therefore in most cases, they have no nutritional power, they do not provide energy, and yet have a certain impact on metabolism and insulin production. There are artificial or synthetic sweeteners (which are the most common and used by both the food industry and private consumers) and "natural" sweeteners.

### Background of the invention

Salted spreadable food creams, generally pasteurized, such as cheese creams, pates and sauces are well known.

Typically, the pasteurization process may affect the flavor of raw materials, as well as their nutritional characteristics.

Once opened, such creams must be consumed in a few days, otherwise they will deteriorate.

It is evident that such a low durability is incompatible with an industrial product which instead requires a relatively long shelf life and durability once opened.

From US4762725 a spreadable food cream is known having a low content of dry milk or derivatives thereof and to be prepared at high temperatures.

US2009/098245 concerns a margarine which is heated to a temperature of 100 °C.

US5102680 concerns a frosting composition having a maximum 6% of lipids.

PT110354 concerns a food composition comprising up to 30,50 % wt of almonds.

US2006/121175 concerns a chocolate food composition.

### Summary of the invention

Object of the present invention is to overcome, at least partially, the drawbacks illustrated above, by providing a salted spreadable food cream susceptible to consumption at ambient temperature.

Another object of the present invention is to provide a salted spreadable food cream having a relatively long shelf life.

Another object of the present invention is to provide a salted spreadable food cream storable at ambient temperature.

Another object of the present invention is to provide a salted spreadable food cream storable at ambient temperature for a relatively long period of time once the package containing it has been opened.

Another object of the present invention is to provide a salted spreadable food cream that maintains its characteristics practically unaltered once its package has been opened.

Such objects, as well as others that will be clearer hereinafter, are fulfilled by a method for preparing a salted spreadable food cream in accordance with claim 1.

The salted spreadable food cream obtainable by the claimed method consists of:
A) 20% by weight to 50% by weight of at least one lipid component;
B) 5% by weight to 50% by weight of at least one dehydrated and/or dried and/or freeze-dried flavour component;
C) 20% by weight to 55% by weight of at least one filler consisting of milk or its derivatives;
D) 0.2% by weight to 3% by weight of at least one emulsifier;
E) 0% by weight (that is to say not present) to 5% by weight of at least one further supporting ingredient;
wherein the % by weight are related to the total weight of the food cream and the sum of the components from A) to E) is the 100% of the food cream.

In particular, the lipid component (A) may be of a quantity between 30% and 40%.

In general, the salted spreadable cream obtainable by the claimed method has a viscosity between 11 Pa.s. (11,000 cP) and 65 Pa.s. (65,000 cP), and it may for example be measured by a Brookfield viscometer in a per se known way. The viscosity measurement is made in accordance with the ISO 2555:2018 standard regulations.

Preferably, the viscosity may be between 20 Pa.s. (20,000 cP) and 55 Pa.s. (55,000 cP), and even more preferably between 28 Pa.s. (28,000 cP) and 45 Pa.s. (45,000 cP), giving the cream the characteristic of spreadability.

The lipid component (A) consists of at least one solid fat and at least one oil. It is understood that "solid fat" means solid fat substances at ambient temperature and pressure.

For example, the solid fat may be selected from the group consisting of: cocoa butter, palm butter, coconut fat, cow butter, karité butter, illipe butter, or a mixture of two or more of these. On the other hand, the oil may be selected from the group consisting of: sunflower oil, olive oil, extra virgin olive oil, rapeseed oil, rice oil, corn oil, linseed oil, sesame seed oil, peanut oil, or a mixture of two or more of these.

In such case, in the lipid component the liquid part may be in a greater quantity than the solid one.

Suitably, therefore, in the lipid component (A) the weight ratio between the one or more oils and the one or more solid fats is between 60 : 40 and 90 : 10, preferably between 65 : 35 and 85 : 15 and even more preferably between 70 : 30 and 80 : 20.

In such case, the cream includes a relatively high quantity of fats and a relatively low protein intake. In such spreadable cream, generally, per 100 g of product the proteins may be less than or equal to 25 g, and preferably less than or equal to 20 g.

On the other hand, in a preferred but not exclusive version of the invention, the spreadable cream obtainable by the claimed method may be used for nutrition in the sport field, dietetic field or otherwise in those areas that require a controlled nutrition.

In this case, the protein intake may be relatively high, for example greater than 25 g, and preferably greater than or equal to 30 g per 100 g of product.

In order to ensure this high intake, the filler (C) includes at least one high protein ingredient, such as whey protein powder, milk protein powder, concentrated milk protein powder or a mixture of two or more of these.

The at least one high protein ingredient is present in a quantity that is greater than or equal to 20% by weight with respect to the total weight of the food cream, preferably in a quantity that is greater than or equal to 22% by weight with respect to the total weight of the food cream, and even more preferably in a quantity that is greater than or equal to 25% by weight with respect to the total weight of the food cream.

In this case, moreover, in the lipid component (A) the weight ratio between the one or more oils and the one or more solid fats may be between 80 : 20 and 95 : 5, preferably between 85 : 15 and 95 : 5.

In this case, moreover, per 100 g of product the carbohydrates may be less than 30 g, and preferably less than or equal to 25 g.

In this case, moreover, per 100 g of product the total fats may be less than 40 g, and preferably less than or equal to 37.5 g. Suitably, moreover, per 100 g of product the saturated fats may be less than 12 g, and preferably less than or equal to 10 g.

Preferably, the lipid component (A) will not consist of oil only. In this case, indeed, the food cream would be too liquid, therefore the spreadability would be compromised. On the other hand, a lipid component (A) consisting of solid fat only would not have a good spreadability.

In this case, in order to maintain a good consistency and an excellent spreadability of the cream, the one or more oils may be in a quantity that is less than or equal to 30% by weight with respect to the total weight of the food cream, preferably less than or equal to 25% by weight with respect to the total weight of the food cream, and even more preferably less than or equal to 22% by weight with respect to the total weight of the food cream.

The lipid component (A) may be of either vegetable or animal origin.

The flavour component (B) may be selected from the group consisting of: freeze-dried smoked salmon, semi-finished product of corn with cheese, powder of melted cheese, freeze-dried pecorino romano cheese, freeze-dried cream of tomato, dried oregano, freeze-dried mozzarella, or a mixture of two or more of these.

Preferably, the flavour component (B) may be of a quantity between 5% by weight and 50% by weight, more preferably between 10% by weight and 35% by weight, even more preferably between 15% by weight and 28% by weight.

In this way, it may be possible to characterize the salted spreadable cream from an organoleptic and nutritional point of view.

The filler (C) may be selected from the group consisting of: skimmed milk powderwhole, whole milk powder, whey powder, delactosed whey powder, whey demineralized powder, whey protein powder, milk protein powder, or a mixture of two or more thereof.

Preferably, the filler (C) may be of a quantity between 30% by weight and 45% by weight.

The one or more emulsifiers (D) may be one or more lecithins, preferably a sunflower lecithin.

Preferably, the one or more emulsifiers (D) may be present in the food cream in a quantity from 0.25% by weight to 2.5% by weight, and even more preferably from 0.35% by weight to 2% by weight.

Moreover, the one or more supporting ingredients (E), if present, may be selected from the group consisting of: salt, fat-soluble flavours, dyes, preservatives, starches, food additives, or a mixture of two or more of these.

If present, the one or more supporting ingredients (E) may be present in the food cream in a quantity from 0.1% by weight to 5% by weight, preferably from 0.25% by weight to 4% by weight and even more preferably from 0.5% by weight to 3% by weight.

In this way, it will be possible to contribute to the improvement of the organoleptic, nutritional and structural performance of the food cream.

According to a preferred but not exclusive embodiment, the salted spreadable food cream obtainable by the claimed method may consist of:
A) from 20% by weight to 50% by weight of at least one lipid component which includes or is consisting of at least one solid fat;
B) from 10% by weight to 35% by weight of at least one dehydrated and/or dried and/or freeze-dried flavour component;
C) from 20% by weight to 55% by weight of at least one filler consisting of milk or its derivatives;
D) from 0.2% by weight to 3% by weight of at least one emulsifier;
E) from 0% by weight (that is to say not present) to 5% by weight of at least one further supporting ingredient;
wherein the % by weight are related to the total weight of the food cream and the sum of the components from A) to E) is the 100% of the food cream.

According to another preferred but not exclusive embodiment, the salted spreadable food cream obtainable by the claimed method may consist of:
A) from 30% by weight to 40% by weight of at least one lipid component which includes or is consisting of at least one solid fat;
B) from 15% by weight to 28% by weight of at least one dehydrated and/or dried and / or freeze-dried flavour component;
C) from 30% by weight to 45% by weight of at least one filler consisting of milk or its derivatives;
D) from 0.2% by weight to 3% by weight of at least one emulsifier;
E) from 0% by weight (that is to say not present) to 5% by weight of at least one further supporting ingredient;
wherein the % by weight are related to the total weight of the food cream and the sum of the components from A) to E) is the 100% of the food cream.

The food cream is salted, that is to say perceived by the consumer as such. Salt may be already present in the ingredients or added, for example as fine salt.

In particular, the food cream has a quantity of salt between 1 g / 100 g and 2.5 g / 100 g.

Preferably, the quantity of salt may be between 1.3 g / 100 g and 2.2 g / 100 g.

In a per se known way, the quantity of salt may be evaluated during the calculation of the nutritional values of the food cream and it may correspond to the quantity of salt that is naturally present in the ingredients. On the other hand, the quantity of salt may be evaluated by the method of the per se known titration.

The food cream obtainable by the claimed method has a fineness between 10 µm and 100 µm, preferably between 14 µm and 60 µm, more preferably between 15 µm and 45 µm and even more preferably between 16 µm and 30 µm.

The fineness measurement may be done in a per se known way by a Sedigraph or by a grindometer, in accordance with the ISO 1524:2020 standards.

In this way, the food cream will acquire a particular velvety appearance.

Moreover, the food cream may be substantially anhydrous, and has a value of water activity lower than 0.5 measured according to the ISO 18787: 2017 standards.

Such value related to the water activity may ensure the absence of microorganisms proliferation, capable of making the food cream deteriorate.

In this way, it will be possible to give the food cream a shelf life at ambient temperature or substantially around 20 °C - 30 °C lasting over time, even after contact between the cream itself and the air, for example once its package has been opened.

Thanks to such characteristics, the food cream obtainable by the claimed method may reach a shelf life equal to or longer than 12 months from the date of production, or even more in case of modified atmosphere packaging.

Moreover, once the package has been opened, the food cream may have a shelf life of 12 months. Such times are compatible with the standards of the modern food industry.

Suitably, the food cream may be substantially free of added sugars, sweeteners, cocoa and derivatives such as chocolate and dried fruit.

In particular, it is free of dried fruit such as hazelnuts, almonds, pistachios, peanuts and similar.

Preferably, the food cream may have a carbohydrate content of which sugars being less than or equal to 32% by weight.

Such sugars may be the sugars that are naturally present within the raw material itself.

The food spreadable cream obtainable by the claimed method is prepared by refining the ingredients, for example in a ball mill of a per se known type.

The refining process takes place at a working temperature between 35°C and 50°C, preferably between 40°C and 45°C.

Furthermore, the refining takes place in an overall working time between 20 minutes and 140 minutes, and preferably between 40 minutes and 120 minutes.

Prior to refining, the solid fat may be melted by melting it at a maximum melting temperature of 50°C, for a working time between 60 minutes and 120 minutes, in order to bring it into liquid or semi-liquid form.

For example, the melting of the solid fat may be done by a per se known melter, or by melting the latter in a steel pot placed on an induction plate.

Alternatively, it may be possible to collect the solid fat already in liquid form, for example from a suitable heated container.

Subsequently, the solid fat in liquid or semi-liquid form together with the oil may be inserted into a ball mill along with the above ingredients B, C), D) and optionally E) for the refining.

Optionally, the lipid component (A) including solid fat and oil may be a pre-made semi-finished product, of a per se known type.

Ingredients B, C), D) and optionally E) may be all inserted in the ball mill and it may be possible to proceed with the temperatures and times described above.

Preferably, however, the refining may take place in two successive steps, first refining the solid fat in liquid or semi-liquid form, the possible oil, and the ingredients B, C) and optionally E) and then, subsequently, by inserting into the ball mill the emulsifier D) and proceeding to a second refining of the assembly until the above-mentioned granulometry.

Even in this case the working temperatures may be those described above. Regarding the working times, the first refining step may take place in 20 minutes - 110 minutes, and preferably in 40 minutes - 90 minutes, while the second refining step may take place in 35 minutes - 85 minutes, and preferably in 45 minutes - 75 minutes.

In a preferred but not exclusive embodiment, the ingredients B), C) and optionally D) and E) may be in the form of semi-finished product already mixed in solid form, preferably in powder form. In particular, such semi-finished product may have a residual humidity that is less than or equal to 5%, measured in a per se known way.

Possibly, such semi-finished product may be prepared by mixing the ingredients and optionally by grinding them in a suitable machine, of a per se known type.

Depending on whether the refining takes place in a single step or in two successive steps, the semi-finished product may or may not include the emulsifier D).

After refining, the obtained cream may be filtered through the use of a circular vibrating screen or a vibrating sieve with magnetic filters, equipped with a square mesh filter with a net light of 300 - 1000 µm, in order to retain any residues of not completely refined ingredients.

The filtered cream may be stocked in different containers depending on the needs. For example, the cream may be stored in thermostated deposits having an internal agitator or inside bucket-type containers of different capacities.

According to another example, the filtered food cream may be pushed, for example through the use of a pump, through pipes in order to be transported to an area of the production chain used for packaging.

What described above will be detailed with reference to the following examples which, in any case, are not intended to limit the scope of protection of the invention.

### Examples

Several examples of spreadable food creams obtainable by the claimed method have been made. For each of these creams the following values have been measured:
- the salt quantity in g / 100 g of product;
- the viscosity in cP by a Brookfield^{®} viscometer;
- the granulometry in µm by the Sedigraph method;
- the water activity measured according to ISO 18787: 2017 standards.

### Example no. 1 - pizza flavored salted spreadable cream

A winter variant of a cream (10 kg) was prepared, with the addition of table salt, the presence of two freeze-dried products and two different lipids, a solid fat such as cocoa butter and a liquid oil such as extra virgin olive oil in a composition of 15.0% and 85.0% respectively. The cream in question has the characteristic flavor of tomato and the scent of oregano, with a delicate note of mozzarella. The composition is in the following table.

| | SUPPLIER | INGREDIENT | DESCRIPTION | % |
|---|---|---|---|---|
| B | LYOITALIA | Creamy tomato soup | freeze-dried powder | 26.786 |
| A | MONINI | extra virgin olive oil | oil | 28.600 |
| C | REIRE | Whey | powder | 23.681 |
| B | LYOITALIA | Julienne mozzarella | freeze-dried in sticks | 8.066 |
| A | ICAM | cocoa butter | solid fat | 5.000 |
| C | REIRE | skimmed milk | powder | 6.517 |
| D | Padovana Macinazione | sunflower lecithin | liquid | 0.700 |
| B | BIO AROMI | oregano | dried | 0.400 |
| E | ITALKALI | salt | fine | 0.250 |

The cream was first prepared by melting the cocoa butter in a melter at a temperature of 40°C, then adding the oil and placing it all in a ball mill with the powders. After about 50 minutes, the lecithin is added and the ball mill is restarted for a further 60 minutes. During refining, the temperature did not exceed 45°C. The characteristics of this cream are:

| | |
|---|---|
| Water activity (Aw): | 0.25 |
| Viscosity (cP): | 39,000 |
| Granulometry (µm): | 18.2 |
| Salt (g/100g): | 2.1 |

### Nutritional values per 100g of product:

| | | |
|---|---|---|
| Energy value: | | 530.7 Kcal |
| Proteins: | | 10.1 g |
| Carbohydrates: | | 37.4 gr |
| | of which sugars | 25.0 g |
| Fat: | | 37.9 g |
| | of which saturated: | 8.7 g |
| of which monounsaturated: | | 11.2 g |
| of which polyunsaturated: | | 14.5 g |

### Example no. 2 - pecorino cheese flavored salted spreadable cream

The summer variant of a cream (10 kg) was prepared, without added salt, with the presence of only one freeze-dried product and two different lipids, a solid fat such as cocoa butter and a liquid oil such as sunflower oil in a composition of 20.5% and 79.5% respectively. The flavor of this cream is typical of pecorino cheese, in the Roman variant. The composition is in the following table.

| | SUPPLIER | INGREDIENT | DESCRIPTION | % |
|---|---|---|---|---|
| C | REIRE | Whey | powder | 38.580 |
| B | LYOITALIA | Pecorino cheese | freeze-dried | 27.000 |
| A | OP CERALI | sunflower seed oil | oil | 20.220 |
| C | REIRE | skimmed milk | powder | 8.500 |
| A | ICAM | cocoa butter | fat | 5.200 |
| D | Padovana Macinazione | sunflower lecithin | liquid | 0.500 |

Similarly to the foregoing, the cream was first prepared by melting the cocoa butter in a melter at a temperature of 40°C, then adding the oil and placing it all in a ball mill with the powders. After about 50 minutes, the lecithin is added and the ball mill is restarted for a further 60 minutes. During refining, the temperature did not exceed 45°C. The characteristics of this cream are:

| | |
|---|---|
| Water activity (Aw): | 0.21 |
| Viscosity (cP): | 41,000 |
| Granulometry (µm): | 21.0 |
| Salt (g/100g): | 2.2 |

### Nutritional values per 100g of product:

| | | |
|---|---|---|
| Energy value: | | 572.6 Kcal |
| Proteins: | | 18.2 g |
| Carbohydrates: | | 33.5 g |
| | of which sugars | 29.6 g |
| Fat: | | 40.7 g |
| | of which saturated: | 16.1 g |
| | of which monounsaturated: | 8.5 g |
| | of which polyunsaturated: | 10.3 g |

### Example no. 3 - cheese flavored salted spreadable cream

A cream (10 kg) was prepared without added salt, with the presence of a mixture of powdered melted cheeses, two palm oil-based lipids, and a soy lecithin, the result is a cheese flavored cream, without a precise connotation, since a blend of cheeses is used, in a lower quantity than other recipes. The composition is in the following table.

| | SUPPLIER | INGREDIENT | DESCRIPTION | % |
|---|---|---|---|---|
| A | UNIGRA' | UNIGRIN C230 | fat | 41.500 |
| C | REIRE | Whey | powder | 38.500 |
| B | LACTOSAN | melted cheese | powder | 10.000 |
| C | REIRE | skimmed milk | powder | 8.500 |
| D | Padovana Macinazione | soy lecithin | liquid | 1.500 |

Similarly to the foregoing, the cream was first prepared by melting the solid fat in a melter at a temperature of 40 °C, then placing it in a ball mill with the powders. After about 50 minutes, the lecithin is added and the ball mill is restarted for a further 60 minutes. During refining, the temperature did not exceed 45 °C. The characteristics of this cream are:

| | |
|---|---|
| Water activity (Aw): | 0.24 |
| Viscosity (cP): | 37,000 |
| Granulometry (µm): | 19.4 |
| Salt (g/100g): | 1.3 |

### Nutritional values per 100g of product:

| | | |
|---|---|---|
| Energy value: | | 589.4 Kcal |
| Proteins: | | 9.3 g |
| Carbohydrates: | | 38.1 g |
| | of which sugars | 30.4 g |
| Fat: | | 44.5 g |
| | of which saturated: | 14.6 g |
| | of which monounsaturated: | 0.0 g |
| | of which polyunsaturated: | 0.0 g |

### Example no. 4 - PUFF flavored salted spreadable cream

A cream (10 kg) was prepared without added salt, with the presence of a purchased semi-finished product, in detail it is a corn with cheese snack, available on the market under the trade name of "Puff" from the company CRIK CROK, two palm oil-based lipids. Furthermore, the recipe is by its very nature gluten-free. The composition is in the following table.

| | SUPPLIER | INGREDIENT | DESCRIPTION | % |
|---|---|---|---|---|
| B | CRIK CROK | Puff | Corn with cheese semi-finished product | 33.500 |
| A | UNIGRA' | UNIGRIN C230 | fat | 28.800 |
| C | REIRE | Whey | powder | 27.500 |
| C | REIRE | skimmed milk | powder | 6.000 |
| A | UNIGRA' | UNIGRAL F936 | fat | 3.200 |
| D | Padovana Macinazione | sunflower lecithin | liquid | 1.000 |

Similarly to the foregoing, the cream was first prepared by melting the solid fat in a melter at a temperature of 40 °C, then placing it in a ball mill with the powders and the corn semi-finished product. After about 50 minutes, the lecithin is added and the ball mill is restarted for a further 60 minutes. During refining, the temperature did not exceed 45 °C. The characteristics of this cream are:

| | |
|---|---|
| Water activity (Aw): | 0.25 |
| Viscosity (cP): | 32,000 |
| Granulometry (µm): | 19.9 |
| Salt (g/100g): | 1.4 |

### Nutritional values per 100g of product:

| | | |
|---|---|---|
| Energy value: | | 577.9 Kcal |
| Proteins: | | 7.6 g |
| Carbohydrates: | | 44.1 g |
| | of which sugars | 24.7 g |
| Fat: | | 41.2 g |
| | of which saturated: | 3.9 g |
| | of which monounsaturated: | 0.0 g |
| | of which polyunsaturated: | 0.0 g |

### Example no. 5 - smoked salmon flavored salted spreadable cream

A cream (10 kg) was prepared with the addition of salt, the presence of a freeze-dried product based on a fish product such as salmon in the smoked version, a palm oil-based lipid and coconut, the recipe being also gluten free. The composition is in the following table.

| | SUPPLIER | INGREDIENT | DESCRIPTION | % |
|---|---|---|---|---|
| C | REIRE | Whey | powder | 38.500 |
| A | UNIGRA' | UNIGRIN C230 | fat | 37.000 |
| B | LYOITALIA | smoked salmon | freeze-dried | 15.000 |
| C | REIRE | skimmed milk | powder | 8.350 |
| D | Padovana Macinazione | sunflower lecithin | liquid | 1.000 |
| E | ITALKALI | salt | fine | 0.150 |

The cream was first prepared by melting the solid fat in a melter at a temperature of 40 °C, then placing it in a ball mill with the powders. After about 50 minutes, the lecithin is added and the ball mill is restarted for a further 60 minutes. During refining, the temperature did not exceed 45 °C. The characteristics of this cream are:

| | |
|---|---|
| Water activity (Aw): | 0.21 |
| Viscosity (cP): | 35,000 |
| Granulometry (µm): | 20.5 |
| Salt (g/100g): | 1.6 |

### Nutritional values per 100g of product:

| | | |
|---|---|---|
| Energy value: | | 596.1 Kcal |
| Proteins: | | 15.0 g |
| Carbohydrates: | | 33.7 g |
| | of which sugars | 31.1 g |
| Fat: | | 44.6 g |
| | of which saturated: | 13.4 g |
| | of which monounsaturated: | 0.0 g |
| | of which polyunsaturated: | 0.0 g |

### Example no. 6 - Parmigiano Reggiano cheese flavored protein salted spreadable cream

The high protein variant of a cream (10 kg) was prepared, with the addition of common salt, with the presence of only one freeze-dried product and two different lipids, one solid fat such as cocoa butter and one liquid oil such as sunflower oil in a weight ratio of 11 : 89, of milk derivatives proteins of animal origin, of chicory fiber (inulin). The taste of this cream is typical of Parmigiano Reggiano cheese. The composition is in the following table.

| | SUPPLIER | INGREDIENT | DESCRIPTION | % |
|---|---|---|---|---|
| C | REIRE | Whey concentrated proteins | powder | 34.000 |
| A | OP CEREALI | High oleic sunflower oil | oil | 24.000 |
| B | LYO EUROPA | Parmigiano reggiano | freeze-dried | 21.000 |
| B | REIRE | Inulin | powder | 7.000 |
| C | REIRE | skimmed milk | powder | 6.500 |
| C | REIRE | Whey | powder | 3.000 |
| A | ICAM | Cocoa butter | solid fat | 3.000 |
| D | PADOVANA MACINAZIONE | Sunflower lecithin | emulsifier | 1.200 |
| E | ITALKALI | Salt | fine | 0.300 |

The cream was first prepared by melting the cocoa butter in a melter at a temperature of 40 °C, then adding the oil and placing it all in a ball mill with the powders. After about 50 minutes, the lecithin is added and the ball mill is restarted for a further 60 minutes. During refining, the temperature did not exceed 45 °C. The characteristics of this cream are:

| | |
|---|---|
| Water activity (Aw): | 0.30 |
| Viscosity (cP): | 37,000 |
| Granulometry (µm): | 22 |
| Salt (g/100g): | 0.8 |

### Nutritional values per 100g of product:

| | | |
|---|---|---|
| Energy value: | | 548.8 Kcal |
| Proteins: | | 37.8 g |
| Carbohydrates: | | 19.6 g |
| | of which sugars | 6.5 gr |
| Fat: | | 14.5 g |
| | of which saturated: | 11.2 g |
| | of which monounsaturated: | 14.5 g |
| | of which polyunsaturated: | 14.5 g |

### Example no. 7 - pesto genovese flavored protein salted spreadable cream

The high protein variant of a cream (10 kg) was prepared, with the addition of common salt, the presence of only one freeze-dried product and two different lipids, one solid fat such as cocoa butter and one liquid oil such as sunflower oil in a weight ratio of 11.0 : 89.0, of milk derivatives proteins of animal origin, chicory fiber (inulin), of pre-cooked semolina in the form of flour. The cream in question has the characteristic flavor of pesto genovese, with a predominant note of basil, a good taste of pecorino cheese and a final note of toasted pine nuts. The composition is in the following table.

| | SUPPLIER | INGREDIENT | DESCRIPTION | % |
|---|---|---|---|---|
| C | REIRE | Whey concentrated proteins | powder | 26.500 |
| A | OP CEREALI | High oleic sunflower oil | oil | 25.800 |
| B | LYO EUROPA | Pesto genovese | freeze-dried | 19.000 |
| B | REIRE | Inulin | powder | 7.500 |
| C | PADOVANA MACINAZIONE | pre-cooked semolinas | flour | 6.950 |
| C | REIRE | Low-fat milk | powder | 6.500 |
| A | ICAM | Cocoa butter | solid fat | 3.200 |
| C | REIRE | Whey | powder | 2.800 |
| D | PADOVANA MACINAZIONE | Sunflower lecithin | emulsifier | 1.200 |
| E | ITALKALI | Salt | fine | 0.550 |

The cream was first prepared by melting the cocoa butter in a melter at a temperature of 40 °C, then adding the oil and placing it all in a ball mill with the powders. After about 50 minutes, the lecithin is added and the ball mill is restarted for a further 60 minutes. During refining, the temperature did not exceed 45 °C. The characteristics of this cream are:

| | |
|---|---|
| Water activity (Aw): | 0.34 |
| viscosity (cP): | 42,000 |
| Granulometry (µm): | 21 |
| Salt (g/100g): | 1.7 |

### Nutritional values per 100g of product:

| | | |
|---|---|---|
| Energy value: | | 536.0 Kcal |
| Proteins: | | 28.0 g |
| Carbohydrates: | | 27.7 gr |
| | of which sugars | 6.5 g |
| Fat: | | 34.8 g |
| | of which saturated: | 8.3 g |
| | of which monounsaturated: | 0.0 g |
| | of which polyunsaturated: | 0.0 g |

### Example no. 8 - pizza flavored protein salted spreadable cream

The high protein variant of a cream (10 kg) was prepared, with the addition of common salt, with the presence of two freeze-dried products and two different lipids, one solid fat such as cocoa butter and one liquid oil such as sunflower oil in a weight ratio of 18 : 82, of milk derivatives proteins of animal origin, of from chicory fiber (inulin). The cream in question has the characteristic flavor of tomato and the scent of oregano, with a delicate note of mozzarella. The composition is in the following table.

| | SUPPLIER | INGREDIENT | DESCRIPTION | % |
|---|---|---|---|---|
| C | REIRE | Whey concentrated proteins | powder | 37.000 |
| A | OP CEREALI | High oleic sunflower oil | oil | 27.300 |
| B | LYO EUROPA | Tomato | freeze-dried | 13.000 |
| B | REIRE | Inulin | powder | 7.000 |
| C | ICAM | Cocoa butter | solid fat | 6.000 |
| B | LYO EUROPA | Mozzarella | freeze-dried | 5.000 |
| C | REIRE | Whey | powder | 3.000 |
| D | PADOVANA MACINAZIONE | Sunflower lecithin | emulsifier | 1.200 |
| E | ITALKALI | Salt | fine | 0.300 |
| E | BIO AROMI | Dried oregano | dried | 0.200 |

The cream was first prepared by melting the cocoa butter in a melter at a temperature of 40 °C, then adding the oil and placing it all in a ball mill with the powders. After about 50 minutes, the lecithin is added and the ball mill is restarted for a further 60 minutes. During refining, the temperature did not exceed 45 °C. The characteristics of this cream are:

| | |
|---|---|
| Water activity (Aw): | 0.32 |
| viscosity (cP): | 25,000 |
| Granulometry (µm): | 21 |
| Salt (g/100g): | 1.2 |

### Nutritional values per 100g of product:

| | | |
|---|---|---|
| Energy value: | | 563.7 Kcal |
| Proteins: | | 30.7 g |
| Carbohydrates: | | 25.0 g |
| | of which sugars | 6.2 g |
| Fat: | | 36.5 g |
| | of which saturated: | 8.4 g |
| | of which monounsaturated: | 0.0 g |
| | of which polyunsaturated: | 0.0 g |

## Claims

1. A method for preparing a salty spreadable food cream, consisting of:
A) 20% by weight to 50% by weight of at least one lipid component consisting of at least one solid fat and at least one oil;
B) 5% by weight to 50% by weight of at least one dehydrated and/or dried and/or freeze-dried flavour component;
C) 20% by weight to 55% by weight of at least one filler consisting of powdered milk or its derivatives;
D) 0.2% by weight to 3% by weight of at least one emulsifier;
E) 0% by weight to 5% by weight of at least one further supporting ingredient;
wherein the food cream has a quantity of salt between 1 g / 100 g and 2.5 g / 100 g;
wherein the food cream has a viscosity as measured in accordance with ISO 2555:2018 between 11 Pa.s. (11,000 cP) and 65 Pa.s. (65,000 cP);
wherein the food cream has a fineness as measured in accordance with ISO 1524:2020 between 10 µm and 100 µm;
wherein the food cream has a water activity value as measured in accordance with ISO 18787: 2017 lower than 0.5;
wherein said at least one oil is less than or equal to 30% by weight with respect to the total weight of the food cream;
wherein the cream is substantially free of cocoa and derivatives and dried fruit;
the method comprising the steps of:
- providing the ingredients from A) to D) and optionally E);
- refining said ingredients from A) to D) and optionally E) at a first predetermined working temperature for a first predetermined working time;
wherein said first predetermined working temperature is in a range from 35 °C to 50 °C, said first predetermined working time being between 20 minutes and 140 minutes.

2. Method according to claim 1, wherein said first predetermined working temperature is lower than or equal to 45 ° C.

3. Method according to claim 1 or 2, wherein said providing step further comprises the steps of:
- providing said at least one lipid component A) in liquid or semi-liquid form;
- providing a semi-finished product consisting of the ingredients (B), (C) and optionally (D) and (E) in powder form, in which the residual humidity of the semi-finished product is equal to or less than 5%, the semi-finished product preferably consisting of the ingredients (B), (C) and possibly (E) in powder form.

4. Method according to the preceding claim, wherein said semi-finished product is free of said at least one emulsifier D), said refining step comprising the steps of:
- first refining of the ingredients A), B), C) and optionally E) at a second predetermined working temperature for a second predetermined working time;
- adding said at least one emulsifier D);
- second refining of the ingredients A), B), C), D) and optionally E) at a third predetermined working temperature for a third predetermined working time;
wherein said second and said third predetermined working temperatures are between 30 °C and 55 °C, more preferably between 35 °C and 50 °C, and even more preferably between 40 °C and 45 °C, said second predetermined working time being 20 minutes to 110 minutes, and preferably 40 minutes to 90 minutes, said third predetermined working time being 35 minutes to 85 minutes, and preferably 45 minutes to 75 minutes.

5. Method according to claim 4, wherein said second and said third predetermined working temperature is lower than or equal to 45 ° C.

6. Method according to any one of claims 3 to 5, wherein said step of providing said at least one lipid component A) in liquid or semi-liquid form comprises the step of melting said at least one lipid component A) at a maximum predetermined melting temperature for a predetermined melting time; wherein said maximum predetermined melting temperature is 50 °C, said predetermined melting time being between 60 minutes and 120 minutes.

7. Method according to any one of claims 1 to 6, wherein said at least one lipid component (A) is of a quantity between 30% by weight to 40% by weight.

8. Method according to any one of claims 1 to 7, wherein said viscosity is between 20 Pa.s. (20,000 cP) and 55 Pa.s. (55,000 cP), and preferably between 28 Pa.s. (28,000 cP) and 45 Pa.s. (45,000 cP).

9. Method according to any one of claims 1 to 8, wherein said at least one oil is in a quantity that is less than or equal to 25% by weight with respect to the total weight of the food cream, and preferably in an quantity that is less than or equal to 22% by weight with respect to the total weight of the food cream.

10. Method according to any one of the preceding claims, wherein in said at least one lipid component (A) the weight ratio between said at least one oil and said at least one solid fat is between 60 : 40 and 95 : 5, preferably between 65 : 30 and 85 : 15 and even more preferably between 70 : 30 and 80 : 20.

11. Method according to claim 9 or 10, wherein said at least one solid fat is selected from the group consisting of: cocoa butter, palm butter, coconut fat, cow butter, karité butter, illipe butter or a mixture of two or more of these.

12. Method according to any one of claims 9 to 11, wherein said at least one oil is selected from the group consisting of: sunflower oil, olive oil, extra virgin olive oil, rapeseed oil, rice oil, corn oil, linseed oil, sesame seed oil, peanut oil, or a mixture of two or more of these.

13. Method according to any one of the preceding claims, wherein said at least one flavour component is of freeze-dried type.

14. Method according to any one of the preceding claims, wherein said at least one flavour component is selected from the group consisting of: freeze-dried smoked salmon, semi-finished product of corn with cheese, powder of melted cheese, freeze-dried pecorino romano cheese, freeze-dried cream of cream tomato, dried oregano, freeze-dried mozzarella, or a mixture of two or more of these.

15. Method according to any one of the preceding claims, wherein said at least one filler is selected from the group consisting of: skimmed milk powder, whole milk powder, whey powder, delactosed whey powder, whey demineralized powder, whey protein powder, milk protein powder, or a mixture of two or more of these.

## Patentansprüche

1. Verfahren zur Zubereitung einer salzigen und schmierbaren Lebensmittelcreme, bestehend aus:
A) 20 bis 50 Gewichtsprozent wenigstens einer Lipidkomponente bestehend aus wenigstens einem festen Fett und wenigstens einem Öl;
B) 5 bis 50 Gewichtsprozent wenigstens einer dehydrierten und/oder getrockneten und/oder gefriergetrockneten Geschmackskomponente;
C) 20 bis 55 Gewichtsprozent wenigstens eines Füllstofsf bestehend aus Milchpulver oder dessen Derivaten;
D) 0,2 bis 3 Gewichtsprozent wenigstens eines Emulgators;
E) 0 bis 5 Gewichtsprozent wenigstens einer weiteren unterstützenden Zutat;
wobei die Lebensmittelcreme eine Salzmenge zwischen 1 g/100 g und 2,5 g/100 g aufweist;
wobei die Lebensmittelcreme eine Viskosität gemessen gemäß ISO 2555:2018 zwischen 11 Pa.s. (11,000 cP) und 65 Pa.s. (65,000 cP) aufweist;
wobei die Lebensmittelcreme eine Feinheit gemessen nach ISOCO 1524:2020 zwischen 10 µm und 100 µm aufweist;
wobei die Lebensmittelcreme eine Wasseraktivität gemessen gemäß ISO 18787: 2017 von weniger als 0,5 aufweist;
wobei das wenigstens eine Öl weniger oder gleich 30 Gewichtsprozent bezüglich des Gesamtgewichts der Lebensmittelcreme ausmacht;
wobei die Creme im Wesentlichen frei von Kakao und Derivaten und getrockneten Früchten ist;
wobei das Verfahren folgende Schritte umfasst:
- Bereitstellen der Zutaten von A) bis D) und optional E);
- Raffinieren der Zutaten von A) bis D) und optional E) bei einer ersten vorbestimmten Arbeitstemperatur über eine erste vorbestimmte Arbeitszeit;
wobei die erste vorbestimmte Arbeitstemperatur in der Größenordnung zwischen 35 und 50 °C liegt, die erste vorbestimmte Arbeitszeit zwischen 20 und 140 Minuten beträgt.

2. Verfahren nach Anspruch 1, bei welchem die erste vorbestimmte Arbeitstemperatur kleiner oder gleich 45 °C ist.

3. Verfahren nach einem der Ansprüche 1 oder 2, wobei der Bereitstellungsschritt weiterhin folgende Schritte umfasst:
- Bereitstellen der wenigstens einen Lipidkomponente A) in flüssiger oder halbflüssiger Form;
- Bereitstellen eines halbfertigen Erzeugnisses bestehend aus den Zutaten (B), (C) und optional (D) und (E) in Pulverform, in welchem die Restfeuchtigkeit des halbfertigen Erzeugnisses kleiner oder gleich 5 % ist, das halbfertige Erzeugnis vorzugsweise aus den Zutaten (B), (C) und gegebenenfalls (E) in Pulverform besteht.

4. Verfahren nach dem vorherigen Anspruch, bei welchem das halbfertige Erzeugnis frei von dem wenigstens einen Emulgator (D) ist und der Schritt des Raffinierens folgende Schritte umfasst:
- Zuerst Raffinieren der Zutaten A), B), C) und optional E), bei einer zweiten vorbestimmten Arbeitstemperatur über eine zweite vorbestimmte Arbeitszeit;
- Zugeben des wenigstens einen Emulgators D);
- zweitens Raffinieren der Zutaten A), B), C), D) und optional E) bei einer dritten vorbestimmten Arbeitstemperatur über eine dritte vorbestimmte Arbeitszeit;
wobei die zweite und dritte vorbestimmten Arbeitstemperatur zwischen 30 und 55 °C beträgt, vorzugsweise zwischen 35° und 50 °C und weiterhin bevorzugt zwischen 40 °C und 45 °C, wobei die zweite vorbestimmte Arbeitszeit zwischen 20 und 110 Minuten beträgt, und vorzugsweise zwischen 40 und 90 Minuten, die dritte vorbestimmte Arbeitszeit zwischen 35 und 85 Minuten beträgt und vorzugsweise zwischen 45 und 75 Minuten beträgt.

5. Verfahren nach Anspruch 4, bei welchem die zweite und dritte vorbestimmte Arbeitszeit kleiner oder gleich 45 °C betragen.

6. Verfahren nach einem der Ansprüche 3 bis 5, bei welchem der Schritt des Bereitstellens der wenigstens einen Lipidkomponente A) in flüssiger oder halbflüssiger Form den Schritt des Aufschmelzens der wenigstens einen Lipidkomponente A) bei einer maximalen vorbestimmten Schmelztemperatur über eine vorbestimmte Schmelzzeit umfasst, wobei die vorbestimmte Schmelztemperatur 50 °C beträgt, die vorbestimmte Schmelzzeit zwischen 60 und 120 Minuten beträgt.

7. Verfahren nach einem der Ansprüche 1 bis 6, bei welchem die wenigstens eine Lipidkomponente (A) einen Anteil zwischen 30 und 40 Gewichtsprozent aufweist.

8. Verfahren nach einem der Ansprüche 1 bis 7, bei welchem die Viskosität zwischen 20 Pa.s. (20,000 cP) und 55 Pa.s. (55,000 cP) und vorzugsweise zwischen 28 Pa.s. (28,000 cP) und 45 Pa.s. (45,000 cP) beträgt.

9. Verfahren nach einem der Ansprüche 1 bis 8, bei welchem das wenigstens eine Öl in einer Menge vorgesehen ist, die geringer oder gleich 25 Gewichtsprozent bezüglich des Gesamtgewichts der Lebensmittelcreme mehr beträgt, und vorzugsweise in einer Menge, die weniger oder gleich 22 Gewichtsprozent bezüglich des Gesamtgewichts der Lebensmittelcreme beträgt.

10. Verfahren nach einem der vorhergehenden Ansprüche, bei welchem die wenigstens eine Lipidkomponente (A) das Gewichtsverhältnis zwischen dem wenigstens einen Öl und dem wenigstens einen festen Fett zwischen 60:40 und 95:5, vorzugsweise zwischen 65:30 und 85:15 und weiterhin bevorzugt zwischen 70:30 und 80:20 aufweist.

11. Verfahren ach einem der Ansprüche 9 oder 10, bei welchem das wenigstens eine feste Fett ausgewählt ist aus einer Gruppe bestehend aus: Kakaobutter, Palm Butter, Kokosnussfett, Kuhbutter, Karitébutter, Illipe Butter oder einer Mischung aus diesen.

12. Verfahren nach einem der Ansprüche 9 bis 11, bei welchem das wenigstens eine Öl ausgewählt ist aus einer Gruppe bestehend aus: Sonnenblumenöl, Olivenöl, Extra Virgin Olivenöl, Rapsöl, Reisöl, Maisöl, Leinöl, Sesamöl, Erdnussöl oder einer Mischung von zwei oder mehreren von diesen

13. Verfahren nach einem der vorhergehenden Ansprüche, bei welchem die wenigstens eine Geschmackskomponente gefriergetrocknet ist.

14. Verfahren nach einem der vorhergehenden Ansprüche, bei welchem die wenigstens eine Geschmackskomponente ausgewählt ist aus einer Gruppe bestehend aus: gefriergetrocknetem geräucherten Lachs, einem halbfertigen Produkt aus Mais mit Käse, Pulver aus geschmolzenem Käse, gefriergetrocknetem Pecorino Romano Käse, gefriergetrockneter Creme aus Tomatencreme, getrocknetem Oregano, gefriergetrocknetem Mozzarella oder einer Mischung von 2 oder mehrerer dieser Zutaten.

15. Verfahren nach einem der vorhergehenden Ansprüche, bei welchem der wenigstens eine Füllstoff ausgewählt ist aus einer Gruppe bestehend aus: Abgesahntem Milchpulver, Vollmilchpulver, Molkepulver, laktosefreiem Molkepulver, entminerealisiertem Molkepulver, Molkeproteinpulver, Milchproteinpulver oder einer Mischung aus zwei oder mehreren aus diesen.

## Revendications

1. Procédé de préparation d'une crème alimentaire salée à tartiner, constituée de :
A) 20 % en poids à 50 % en poids d'au moins un composant lipidique constitué d'au moins une matière grasse solide et d'au moins une huile ;
B) 5 % en poids à 50 % en poids d'au moins un composant aromatique déshydraté et/ou séché et/ou lyophilisé ;
C) 20 % en poids à 55 % en poids d'au moins un agent de charge constituée de lait en poudre ou de ses dérivés ;
D) 0,2 % en poids à 3 % en poids d'au moins un émulsifiant ;
E) 0 % en poids à 5 % en poids d'au moins un autre ingrédient de support ;
dans lequel la crème alimentaire possède une quantité de sel comprise entre 1 g/100 g et 2,5 g/100 g ;
dans lequel la crème alimentaire possède une viscosité telle que mesurée conformément à la norme ISO 2555:2018 comprise entre 11 Pa.s. (11 000 cP) et 65 Pa.s. (65 000 cP) ;
dans lequel la crème alimentaire possède une finesse telle que mesurée conformément à la norme ISO 1524:2020 comprise entre 10 µm et 100 µm ;
dans lequel la crème alimentaire possède une valeur d'activité de l'eau telle que mesurée conformément à la norme ISO 18787: 2017 inférieure à 0,5 ;
dans lequel ladite au moins une huile est inférieure ou égale à 30 % en poids par rapport au poids total de la crème alimentaire ;
dans lequel la crème est sensiblement exempte de cacao et de dérivés et de fruits secs ;
le procédé comprenant les étapes de :
- fourniture des ingrédients de A) à D) et facultativement E) ;
- raffinage desdits ingrédients de A) à D) et facultativement E) à une première température de travail prédéterminée pendant une première durée de travail prédéterminée ;
dans lequel ladite première température de travail prédéterminée est comprise entre 35 °C et 50 °C, ladite première durée de travail prédéterminée étant comprise entre 20 minutes et 140 minutes.

2. Procédé selon la revendication 1, dans lequel ladite première température de travail prédéterminée est inférieure ou égale à 45 °C.

3. Procédé selon l'une des revendications 1 à 2, dans lequel ladite étape de fourniture comprend en outre les étapes de :
• fourniture dudit au moins un composant lipidique (A) sous forme liquide ou semi-liquide ;
• fourniture d'un produit semi-fini constitué des ingrédients (B), (C) et facultativement (D) et (E) sous forme de poudre, dans lequel l'humidité résiduelle du produit semi-fini est inférieure ou égale à 5 %, le produit semi-fini étant de préférence constitué des ingrédients (B), (C) et facultativement (E) sous forme de poudre.

4. Procédé selon la revendication précédente, dans lequel ledit produit semi-fini est exempt dudit au moins un émulsifiant D), ladite étape de raffinage comprenant les étapes suivantes :
• un premier raffinage des ingrédients A), B), C) et facultativement E) à une deuxième température de travail prédéterminée pendant une deuxième durée de travail prédéterminée ;
• l'ajout dudit au moins un émulsifiant D) ;
• un deuxième raffinage des ingrédients A), B), C), D) et facultativement E) à une troisième température de travail prédéterminée pendant une troisième durée de travail prédéterminée ;
dans lequel lesdites deuxième et troisième températures de travail prédéterminées sont comprises entre 30 °C et 55 °C, plus préférentiellement entre 35 °C et 50 °C, et encore plus préférentiellement entre 40 °C et 45 °C, ladite deuxième durée de travail prédéterminée étant comprise 20 minutes et 110 minutes, et de préférence entre 40 minutes et 90 minutes, ladite troisième durée de travail prédéterminée étant comprise entre 35 minutes et 85 minutes, et de préférence entre 45 minutes et 75 minutes.

5. Procédé selon la revendication 4, dans lequel lesdites deuxième et troisième températures de travail prédéterminées sont inférieures ou égales à 45 °C.

6. Procédé selon l'une quelconque des revendications 3 à 5, dans lequel ladite étape de fourniture dudit au moins un composant lipidique A) sous forme liquide ou semi-liquide comprend l'étape de fusion dudit au moins un composant lipidique A) à une température de fusion maximale prédéterminée pendant une durée de fusion prédéterminée ; dans lequel ladite température de fusion maximale prédéterminée est de 50 °C, ladite durée de fusion prédéterminée étant comprise entre 60 minutes et 120 minutes.

7. Procédé selon l'une quelconque des revendications 1 à 6, dans lequel ledit au moins un composant lipidique (A) est présent en une quantité comprise entre 30 % en poids et 40 % en poids.

8. Procédé selon l'une quelconque des revendications 1 à 7, dans lequel ladite viscosité est comprise entre 20 Pa.s. (20 000 cP) et 55 Pa.s. (55 000 cP), et de préférence entre 28 Pa.s. (28 000 cP) et 45 Pa.s. (45 000 cP).

9. Procédé selon l'une quelconque des revendications 1 à 8, dans lequel ladite au moins une huile est présente en une quantité inférieure ou égale à 25 % en poids par rapport au poids total de la crème alimentaire, et de préférence en une quantité inférieure ou égale à 22 % en poids par rapport au poids total de la crème alimentaire.

10. Procédé selon l'une quelconque des revendications précédentes, dans lequel dans ledit au moins un composant lipidique (A), le rapport pondéral entre ladite au moins une huile et ladite au moins une matière grasse solide est compris entre 60 : 40 et 95 : 5, de préférence entre 65 : 30 et 85 : 15 et encore plus préférentiellement entre 70 : 30 et 80 : 20.

11. Procédé selon l'une des revendications 9 à 10, dans lequel ladite au moins une matière grasse solide est choisie dans le groupe consistant en : beurre de cacao, beurre de palme, graisse de coco, beurre de vache, beurre de karité, beurre d'illipé ou un mélange de deux ou plus de ceux-ci.

12. Procédé selon l'une quelconque des revendications 9 à 11, dans lequel ladite au moins une huile est choisie dans le groupe composé de : huile de tournesol, huile d'olive, huile d'olive extra vierge, huile de colza, huile de riz, huile de maïs, huile de lin, l'huile de sésame, l'huile d'arachide ou un mélange de deux ou plus de celles-ci.

13. Procédé selon l'une quelconque des revendications précédentes, dans lequel ledit au moins un composant aromatique est de type lyophilisé.

14. Procédé selon l'une quelconque des revendications précédentes, dans lequel ledit au moins un composant aromatique est choisi dans le groupe consistant en : saumon fumé lyophilisé, produit semi-fini de maïs au fromage, poudre de fromage fondu, fromage pecorino romano lyophilisé, crème de tomate lyophilisée, origan séché, mozzarella lyophilisée ou un mélange de deux ou plus de ceux-ci.

15. Procédé selon l'une quelconque des revendications précédentes, dans lequel ladite au moins un agent de charge est choisi dans le groupe consistant en : lait écrémé en poudre, lait entier en poudre, lactosérum en poudre, lactosérum délactosé en poudre, lactosérum déminéralisé en poudre, protéines de lactosérum en poudre, protéines de lait en poudre ou un mélange de deux ou plus de ceux-ci.
